# EUROPEAN PATENT APPLICATION

(11) **EP 4 597 621 A1**
(43) Date of publication of application: **06.08.2025**
(21) Application number: 23929091.9
(22) Date of filing: 24.03.2023
(51) Int. Cl.: H01M 4/505, H01M 4/02, H01M 4/36, H01M 4/66

(54) **POSITIVE ELECTRODE ACTIVE MATERIAL, POSITIVE ELECTRODE SHEET, BATTERY CELL, BATTERY, AND ELECTRIC DEVICE**

(71) Applicant: Contemporary Amperex Technology (Hong Kong) Limited, Central (HK)
(72) Inventor: WEI, Guanjie, Ningde, Fujian 352100 (CN); MENG, Zhen, Ningde, Fujian 352100 (CN); GU, Li, Ningde, Fujian 352100 (CN); SONG, Yuqian, Ningde, Fujian 352100 (CN); ZHANG, Yu, Ningde, Fujian 352100 (CN); LI, Xing, Ningde, Fujian 352100 (CN); SHI, Peng, Ningde, Fujian 352100 (CN)
(74) Representative: Behr, Wolfgang
(86) International application number: PCT/CN2023/083892
(87) International publication number: WO 2024/197489

(57) **Abstract**

Provided are a positive electrode active material, a positive electrode plate, a battery cell, a battery and an electrical apparatus, which belongs to the technical field of secondary batteries. The positive electrode active material includes a lithium-rich manganese-based material and a lithium-containing phosphate, in which, the lithium-rich manganese-based material includes solid particles and hollow particles, the hollow particle including a shell and a cavity provided inside the shell. Both the rate performance and the volume energy density of the battery cell can be taken into consideration in the technical solution of embodiments of the present invention.

## Description

### TECHNICAL FIELD

The present application relates to the technical field of secondary batteries, and particularly relates to a positive electrode active material, a positive electrode plate, a battery cell, a battery and an electrical apparatus.

### BACKGROUND

In recent years, secondary batteries have been widely used in energy storage power systems such as hydropower, thermal power, wind power and solar power stations, as well as the fields of power tools, electric bicycles, electric motorcycles, electric vehicles, military equipment, aerospace and other fields.

As a component of the battery, a positive electrode active material is essential for the performance of the battery. Therefore, how to provide a positive electrode active material to take both the volume energy density and the rate performance of the battery cell into consideration is a technical problem that needs to be solved urgently.

### SUMMARY

In view of the above technical problems, the present application provides a positive electrode active material, so as to take both the rate performance and the volume energy density of the battery cell into consideration.

In order to achieve the above purpose, the present application provides a positive electrode active material, a positive electrode plate, a battery cell, a battery and an electrical apparatus.

In one aspect, provided is a positive electrode active material, which includes a lithium-rich manganese-based material and a lithium-containing phosphate, and the lithium-rich manganese-based material includes solid particles and hollow particles, the hollow particle including a shell and a cavity provided inside the shell.

In this embodiment of the present application, the positive electrode active material includes the lithium-rich manganese-based material and the lithium-containing phosphate, and the lithium-rich manganese-based material and the lithium-containing phosphate are matched with each other, so as to improve the cycle performance of the battery cell. The lithium-rich manganese-based material includes the solid particles and the hollow particles, and the solid particles and the hollow particles are matched with each other, on one hand, the contact area between an electrolyte solution in the battery cell and the lithium-rich manganese-based material is increased, which facilitates the transmission of lithium ions, and furthermore facilitates the improvement of the rate performance of the battery cell; and on the other hand, the compaction density of the positive electrode plate is increased, and furthermore, the volume energy density of the battery cell is increased. Therefore, in this embodiment of the present application, both the rate performance and the volume energy density of the battery cell can be taken into consideration.

In some embodiments, in the lithium-rich manganese-based material, the ratio of the mass A of the solid particles to the mass B of the hollow particles is: 1:1≤A:B≤9:1; optionally, 7:3≤A:B≤8:2; and/or, in the lithium-rich manganese-based material, the ratio of the number E of the solid particles to the number F of the hollow particles is: 70:30≤E:F≤96:4; optionally, 85:15≤E:F≤90:10.

In the above technical solution, the ratio of the mass of solid particles to the mass of hollow particles in the lithium-rich manganese-based material meets: 1:1≤A:B≤9:1, and/or, the ratio of the number E of the solid particles to the number F of the hollow particles is: 70:30≤E:F≤96:4. Therefore, there is a proper contact area between the lithium-rich manganese-based material and the electrolyte solution, which facilitates the transmission of lithium ions, and furthermore facilitates the improvement of the rate performance of the battery cell; and moreover, the lithium-rich manganese-based material has a proper volume, so that the compaction density of the positive electrode plate is increased, and the volume energy density of the battery cell is improved. Optionally, 7:3≤A:B≤8:2, and therefore, both the rate performance and the volume energy density of the battery cell can be taken into consideration. Optionally, 85:15≤E:F≤90:10, and thus both the rate performance and the volume energy density of the battery cell can be further taken into consideration.

In some embodiments, the volume average particle size Dv50 of the solid particles is 2 µm to 8 µm; optionally, 3 µm to 6 µm.

In the above technical solution, the volume average particle size Dv50 of the solid particles is 2 µm to 8 µm. Therefore, on one hand, the solid particles have a proper specific surface area, which facilitates the improvement of the contact area between the electrolyte solution and the solid particles in the lithium-rich manganese-based material, the transmission of more lithium ions per unit time, as well as the improvement of the rate performance of the battery cell; and on the other hand, the solid particles have a proper volume, which facilitates the increase of the compaction density of the positive electrode plate, as well as the improvement of the volume energy density of the battery cell. Optionally, the volume average particle size Dv50 of the solid particles is 3 µm to 6 µm, thereby further improving the rate performance and the volume energy density of the battery cell.

In some embodiments, the volume average particle size Dv50 of hollow particles is 5 µm to 15 µm, optionally, 7 µm to 12 µm.

In the technical solution, the volume average particle size Dv50 of the hollow particles is 5 µm to 15 µm. On one hand, the hollow particles have a proper specific surface area, which facilitates the improvement the contact area between the electrolyte solution and the hollow particles of the lithium-rich manganese-based material, and furthermore facilitates the transmission of more lithium ions per unit time, as well as the improvement of the rate performance of the battery cell. On the other hand, the volume occupied by the hollow particles is proper, so that the volume energy density of the battery cell is improved. Optionally, the volume average particle size Dv50 of the hollow particles is 7 µm to 12 µm, so that both the rate performance and the volume energy density of the battery cell can be taken into consideration.

In some embodiments, the volume average particle size Dv50 of the hollow particles is larger than the volume average particle size Dv50 of the solid particles; optionally, the difference value between the volume average particle size Dv50 of the hollow particles and the volume average particle size Dᵥ50 of the solid particles is 3 µm to 10 µm; further optionally, the difference value is 4 µm to 8 µm; and/or, the number average particle size of the hollow particles is larger than that of the solid particles; optionally, the difference value between the number average particle size of the hollow particles and the number average particle size of the solid particles is 3 µm to 10 µm; and further optionally, the difference value is 4 µm to 8 µm.

In the above technical solution, the volume average particle size Dv50 of the hollow particles is larger than the volume average particle size Dv50 of the solid particles; and/or, the number average particle size of the hollow particles is larger than that of the solid particles, so that the solid particles can be filled in gaps between the hollow particles, which facilitates the improvement of the compaction density of the positive electrode plate, and furthermore facilitates the improvement of the energy density of the battery cell. Optionally, the difference value between the volume average particle size Dv50 of the hollow particles and the volume average particle size Dv50 of the solid particles is 3 µm to 10 µm or further optionally 4 µm to 8 µm; and/or, the difference value between the number average particle size of the hollow particles and the number average particle size of the solid particles is 3 µm to 10 µm or further optionally 4 µm to 8 µm, so that reasonable matching of the solid particles and the hollow particles can be realized, the gaps between the hollow particles are better filled, furthermore, the compaction density of the positive electrode plate is improved, and the energy density of the battery cell is improved.

In some embodiments, the size of the cavity of the hollow particles is 2 µm to 10 µm; optionally, 4 µm to 7 µm.

In the above technical solution, the size of the cavity of the hollow particles is 2 µm to 10 µm. On one hand, the hollow particles have a proper specific surface area, so that more lithium ions can be transmitted per unit time, and the rate performance of the battery cell can be improved; and on the other hand, the volume occupied by the hollow particles is proper, and thus the volume energy density of the battery cell can be improved. Optionally, the size of the cavity of the hollow particles is 4 µm to 7 µm, so that both the rate performance and the volume energy density of the battery cell can be taken into consideration.

In some embodiments, the volume average particle size Dv50 of the lithium-containing phosphate is 0.3 µm to 1.5 µm; optionally, 0.6 µm to 1.2 µm.

In the above technical solution, the volume average particle size of lithium-containing phosphate in the positive electrode active material is set to be not greater than 1.5 µm, and thus the volume of the lithium-containing phosphate is reduced, and the volume energy density of the battery cell is improved; and the volume average particle size of the lithium-containing phosphate is not less than 0.3 µm, so that a relatively proper contact area can be kept between the lithium-containing phosphate and the electrolyte solution, and furthermore, the rate performance of the battery cell is improved. Optionally, the volume average particle size Dv50 of the lithium-containing phosphate is 0.6 µm to 1.2 µm, so that both the rate performance and the volume energy density of the battery cell are further taken into consideration.

In some embodiments, based on the total mass of the positive electrode active material, the mass ratio of the lithium-rich manganese-based material is P, 10wt%≤P<100wt%, optionally, 30wt%≤P≤70wt%.

In the above technical solution, the mass ratio of the lithium-rich manganese-based material in the positive electrode active material is reasonably set, so that both the volume energy density and the rate performance of the battery cell are taken into consideration.

In some embodiments, the gram volume of the lithium-rich manganese-based material is shown as Q≥153mAh/g; optionally, Q≥158mAh/g.

In the above technical solution, the gram volume of the lithium-rich manganese-based material is shown as Q≥153mAh/g, and thus the energy density of the battery cell is improved. Optionally, Q≥158mAh/g, so that the energy density of the battery cell is further improved.

In some embodiment, a general formula of the lithium-rich manganese-based material is nLi₂MnO₃ • (1-n)Li₁₊ₓ₁Niₓ₂Mnₓ₃M¹ₓ₄O₂, in which, 0.1≤n≤0.3, 0≤x1≤0.1, 0.3≤x2 < 1, 0 < x3≤0.7, and 0≤x4≤0.1, and M¹ includes one or more of Na, Mg, Al, Ca, Ba, V, Zn, Ti, Fe, Co, Cr, Nb, W, Mo, Zr, Ta, and Hf. Therefore, the lithium-rich manganese-based material can be flexibly selected according to actual requirements.

In some embodiments, a general formula of the lithium-containing phosphate is Li_{1+y1}Fe_{y2}Mn_{y3}M²_{y4}PO₄, in which, 0≤y1≤0.1, 0≤y2≤1, 0≤y3≤1, and 0≤y4≤0.1, and M² includes one or more of transition metal elements except Fe and Mn and non-transition metal elements. Therefore, the lithium-containing phosphate can be flexibly selected according to actual requirements.

In a second aspect, provided is a positive electrode plate, which includes the positive electrode active material in a first aspect and any possible embodiments.

In a possible embodiment, the compaction density of the positive electrode plate is 2.70 g/cm³ to 2.90 g/cm³, optionally, 2.75 g/cm³ to 2.85 g/cm³. Therefore, the battery cell has high volume energy density.

In a third aspect, provided is a battery cell, which includes the positive electrode plate in the second aspect and any possible embodiments.

In a fourth aspect, provided is a battery, which includes the battery cell in the third aspect.

In a fifth aspect, provided is an electrical apparatus, which includes the battery in the fourth aspect.

In this embodiment of the present application, the positive electrode active material includes the lithium-rich manganese-based material and the lithium-containing phosphate, and the lithium-rich manganese-based material and the lithium-containing phosphate are matched with each other, so as to improve the cycle performance of the battery cell. The lithium-rich manganese-based material includes the solid particles and the hollow particles, and the solid particles and the hollow particles are matched with each other, on one hand, the contact area between an electrolyte solution in the battery cell and the lithium-rich manganese-based material is increased, which facilitates the transmission of lithium ions, and furthermore facilitates the improvement of the rate performance of the battery cell; and on the other hand, the compaction density of the positive electrode plate is increased, and furthermore, the volume energy density of the battery cell is increased. Therefore, in this embodiment of the present application, both the rate performance and the volume energy density of the battery cell can be taken into consideration.

### BRIEF DESCRIPTION OF THE DRAWINGS

To more clearly describe the technical solutions of the examples of the present application, the drawings to be used in the examples of the present application will be briefly introduced below. Apparently, the drawings described below are merely some examples of the present application. For those of ordinary skills in the art, other drawings may also be obtained based on these drawings without making creative work. The accompanying drawings are not drawn to actual scale.
FIG. 1 is a schematic diagram of a battery cell according to an embodiment of the present application.
FIG. 2 is an explosive structural schematic diagram of a battery cell according to an embodiment of the present application.
FIG. 3 is a schematic diagram of a battery module according to an embodiment of the present application.
FIG. 4 is a schematic diagram of a battery according to an embodiment of the present application.
FIG. 5 is an explosive structural schematic diagram of a battery according to an embodiment of the present application.
FIG. 6 is a schematic diagram of an electrical apparatus according to an embodiment of the present application.

### DETAILED DESCRIPTION

The following is to make appropriate reference to the accompanying drawings to describe in detail the embodiments of a positive electrode active material, the positive electrode plate, a battery cell, a battery and an electrical apparatus of the present application. However, there may be cases that unnecessary elaboration is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and the following descriptions are provided for the full understanding of the application by those skilled in the art and are not intended to limit the subject matter of the claims.

In the description of the present application, it is to be noted that, unless otherwise indicated, "plurality" refers to more than two; the terms "upper", "lower", "left", "right", "inner", "outer" etc., indicate orientations or positional relationships for convenience and simplification of the present application and do not indicate or imply that the device or element referred to must have a particular orientation, be constructed and operated in a particular orientation, and therefore cannot be construed as limiting the present application. In addition, the terms "first", "second", "third", etc., are used for descriptive purposes only and should not be construed as indicating or implying relative importance.

The "range" disclosed in the present application is defined in a form of a lower limit and an upper limit, and the given range is limited by a selected lower limit and a selected upper limit, which define the boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when an integer with a parameter of ≥2 is expressed, it is equivalent to disclosing that the parameter is an integer 2, 3, 4, 5, 6, 7, 8, 9, 10, 11, 12, etc.

Unless otherwise specified, all steps of the present application can be carried out sequentially or randomly, preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

Unless otherwise specified, all the technical features of the present application, as well as the optional technical features, may be combined with each other to form a new technical solution.

In recent years, power batteries have been widely used in the fields of power tools, electronic products, electric vehicles, aerospace and other fields due to high energy density and long service life, so they have great development. In general, a power battery includes a positive electrode plate, a negative electrode plate, an electrolyte and a separator. During the charging and discharging process of the battery, active ions are embedded and removed back and forth between the positive electrode plate and negative electrode plate. In which, an electrolyte plays the role of conducting ions between the positive electrode plate and negative electrode plate. The separator is arranged between the positive electrode plate and negative electrode plate, which prevents the positive electrode plate and negative electrode plate from short circuit and enables ions to pass through, and thus the electrochemical reaction of the power battery can be carried out normally.

**In** the present application, a lithium-ion battery is taken as an example, which is a typical power battery, and because the lithium-ion battery is charged and discharged by the chemical reaction of intercalation and de-intercalation of the lithium ions between the positive electrode plate and negative electrode plate, it is also called a rocking chair battery. During the charging process of the lithium-ion battery, the lithium ions are removed from a positive electrode, moved by electrolyte conduction and then embedded into a negative electrode active material; and during the discharge process, the lithium ions are removed from the negative electrode, moved by electrolyte conduction, and then embedded into a positive electrode active material.

It is to be understood that the process of "lithium intercalated" and "embedded" described in the present application refers to the process of the lithium ions being intercalated in the positive electrode active material or the negative electrode active material due to the electrochemical reaction, and the process of "removed", "lithium de-intercalated" and "de-intercalated" described in the present application refers to the process in which lithium ions are removed in the positive electrode active material or the negative electrode active material due to electrochemical reaction.

The positive electrode active material of the lithium-ion battery is usually transition metal oxides containing lithium, and transition metal compounds containing lithium, such as lithium cobalt oxide, lithium manganese oxide, lithium iron phosphate, ternary materials, and lithium-rich manganese-based materials. In which, the lithium-rich manganese-based materials are mainly based on cheaper manganese, so the material cost is low, and the gram volume is high, which is conducive to improving the energy density of lithium-ion battery. However, as the charging and discharging process progresses, the structure of lithium-rich manganese-based materials changes, resulting in poor cycling performance of the battery.

In some treatment methods, the positive electrode active material is prepared by a method of mixing lithium-containing phosphates (e.g., lithium iron phosphate) with the lithium-rich manganese-based materials, thus improving the cycling performance of the battery. However, the battery obtained by this treatment method has the problem of poor rate performance.

In view of this, an embodiment of the present application provides a positive electrode active material, which includes a lithium-rich manganese-based material and a lithium-containing phosphate, and the lithium-rich manganese-based material includes solid particles and hollow particles. The solid particles and the hollow particles are matched, thus the contact area between the lithium-rich manganese-based material and the lithium-containing phosphate can be increased, which facilitates the transmission of the lithium ions, and further facilitates the improvement of the rate performance of a battery cell.

### [Positive electrode active material]

An embodiment of the present application provides a positive electrode active material, which includes a lithium-rich manganese-based material and a lithium-containing phosphate.

The lithium-rich manganese-based material includes solid particles and hollow particles. The lithium-rich manganese-based material includes two types of particles, namely, solid particles and hollow particles.

The hollow particle includes a shell and a cavity provided inside the shell. That is, the hollow particles are particles with the cavity provided inside.

The solid particles can be understood as particles without the cavity provided inside. In a case that the particle size of the solid particles is the same as that of hollow particles, the specific surface area of the hollow particles is larger; and in a case that the solid particles and the hollow particles have the same mass, the surface area of the hollow particles is larger.

The gram volume of the lithium-rich manganese-based material is high, and the structure containing lithium phosphate is stable, so the positive electrode active material including the lithium-rich manganese-based material and the lithium phosphate has proper gram volume and stability; and when the positive electrode active material is used for preparing the battery cell, the obtained battery cell can have high energy density and excellent cycle performance.

Compared with that the lithium-rich manganese-based material is completely solid particles, the lithium-rich manganese-based material in this embodiment of the present application includes the solid particles and the hollow particles, so that the specific surface area is larger. Therefore, the contact area between the lithium-rich manganese-based material and the electrolyte solution in the battery cell is larger, which facilitates the transmission of lithium ions, and further facilitates the improvement of the rate performance of the battery cell.

The rate performance of the battery cell is related to the transmission condition of the lithium ions. Generally, the more the number of lithium ions transmitted per unit time is, the more the rate performance of the battery cell is improved.

In addition, compared that with the lithium-rich manganese-based material is completely hollow particles, the lithium-rich manganese-based material in this embodiment of the present application includes the solid particles and the hollow particles, thus the space occupied by the positive electrode active material is reduced, which facilitates the improvement of the volume energy density of the battery cell.

The shapes of solid particles and hollow particles in this embodiment of the present application can include: various shapes such as a spherical shape, an approximate spherical shape (such as an ellipsoidal shape), and an irregular shape.

In this embodiment of the present application, the positive electrode active material includes the lithium-rich manganese-based material and the lithium-containing phosphate, so the cycle performance of the battery cell is improved; and the lithium-rich manganese-based material includes the solid particles and the hollow particles, the solid particles and the hollow particles are matched, thus the rate performance of the battery cell is improved in a case of relatively high energy density, and then both the volume energy density and the rate performance of the battery cell are taken into consideration.

In some embodiments, in the lithium-rich manganese-based material, the ratio of the mass A of the solid particles to the mass B of the hollow particles is: 1:1≤A:B≤9:1, for example, A: B is 1:1, 2:1, 3:1, 4:1, 5:1, 6:1, 7:1, 8:1, 9:1 and any range thereof; and/or, in the lithium-rich manganese-based material, the ratio of the number E of the hollow particles to the number F of the solid particles is: 70:30≤E:F≤96:4, for example, E: F is 7:3, 5:1, 10:1, 13:1, 24:1 and any range thereof.

The mass A of the solid particles and the mass B of the hollow particles can be obtained by weighing. For example, in the process of preparing the positive electrode active material, the lithium-rich manganese-based material and the lithium-containing phosphate are mixed to obtain the positive electrode active material. The lithium-rich manganese-based material is obtained by mixing the lithium-rich manganese-based material that is the solid particles and the lithium-rich manganese-based material that is the hollow particles. In the preparation process of the lithium-rich manganese-based material, the hollow particles with a certain mass and the solid particles with a certain mass can be weighed (for example, weighed by a balance) respectively to obtain the mass of the hollow particles and the mass of the solid particles, and then the hollow particles and the solid particles are mixed.

Optionally, the positive electrode plate can be cut to obtain sections of the solid particles and the hollow particles. The volume ratio of the solid particles to the hollow particles is calculated based on the diameters of the sections, and then the mass ratio of the solid particles to the hollow particles is calculated according to the volume ratio of the solid particles to the hollow particles and the average density of the solid particles and the hollow particles.

The ratio E: F of the number E of the solid particles to the number F of the hollow particles can be calculated according to the ratio A: B of the mass A of the solid particles to the mass B of the hollow particles and the particle sizes or volumes and average densities of the solid particles and the hollow particles. Optionally, the positive electrode plate can be cut to obtain the section of the positive electrode plate, and the section can be observed by means of a scanning electron microscope or other modes to obtain the number ratio of the solid particles to the hollow particles.

In a case that the ratio A: B is not smaller than 1:1, the battery cell can have high volume energy density; in a case that the ratio A: B is not larger than 9:1, there will be a proper contact area between the lithium-rich manganese-based material and the electrolyte solution, which facilitates the transmission of the lithium ions, and further facilitates the improvement of the rate performance of the battery cell.

Optionally, 7:3≤A:B≤8:2, for example, the ratio A: B is 7:3, 3:1, 8:2 and any range thereof. Therefore, both the rate performance and the volume energy density of the battery cell can be further taken into consideration.

Optionally, 85:15≤E:F≤90:10, for example, the ratio E: F is 85:15, 7:1, 9:1 and any range thereof. Therefore, both the rate performance and the volume energy density of the battery cell can be further taken into consideration.

In some embodiments, the volume average particle size Dv50 of solid particles is 2 µm to 8µm, optionally, 3 µm to 6 µm. For example, the volume average particle size Dv50 of the solid particles is 2 µm, 3 µm, 4 µm, 5.5 µm, 6 µm, 8 µm or any other numerical value in the above range.

The Dv50 can be the particle size corresponding to the particles with the cumulative volume particle size distribution percentage reaching 50%.

The volume average particle size Dv50 of the solid particles and the volume average particle size Dv50 of the hollow particles can be obtained by testing by means of a laser particle analyzer. For example, powder particles are dispersed in a proper amount of solvent to form dispersion liquid; and then the dispersion liquid is placed in the laser particle analyzer, thus obtaining the particle size of the particles. Optionally, the powder particles can be lithium-rich manganese-based material powder in the preparation process, and can also be powder obtained through the electrode plate (for example, powder of the positive electrode active material obtained from the positive electrode plate in a specific mode and without a binder and other substances).

In a case that the volume average particle size Dv50 of the solid particles is not smaller than 2 µm, the solid particles have a proper specific surface area, thus the contact area between the electrolyte solution and the solid particles is increased, more lithium ions can be transmitted per unit time, and the rate performance of the battery cell can be improved; and in a case that the volume average particle size Dv50 of the solid particles is not larger than 8 µm, the solid particles have a proper volume, thus the compaction density of the positive electrode plate is improved, and the volume energy density of the battery cell is improved.

Optionally, the volume average particle size Dv50 of the solid particles is 3 µm to 6 µm, so that both the rate performance and the volume energy density of the battery cell are improved.

In some embodiments, the volume average particle size Dv50 of the hollow particles is 5 µm to 15 µm. For example, the volume average particle size Dv50 of the hollow particles is 5 µm, 6 µm, 7 µm, 8 µm, 10 µm, 12 µm, 13 µm, 15 µm or any other numerical value in the above range.

In a case that the volume average particle size Dv50 of the hollow particles is not smaller than 5 µm, the hollow particles have a proper specific surface area, so that the contact area between the electrolyte solution and the hollow particles is increased, more lithium ions can be transmitted per unit time, and the rate performance of the battery cell is improved; and in a case that the volume average particle size Dv50 of the hollow particles is not greater than 15 µm, the volume occupied by the hollow particles is reduced, so that the energy density of the battery cell is improved.

Optionally, the volume average particle size Dv50 of the hollow particles is 7 µm to 12 µm, so that both the rate performance and the volume energy density of the battery cell are taken into consideration.

In some embodiments, the volume average particle size Dv50 of the hollow particles is greater than the volume average particle size Dv50 of solid particles; and/or, the number average particle size of the hollow particles is greater than that of the solid particles.

The number average particle size may refer to the particle size corresponding to the particles with the cumulative number particle size distribution percentage reaching 50%.

Optionally, the number average particle size can be measured by the same test method as the volume average particle size. For example, the number average particle size can be tested by the laser particle size analyzer.

Optionally, the number average particle size can be indirectly or directly measured by the following mode. The positive electrode plate is cut to obtain the section of the positive electrode plate, and the section is observed by an electron microscope. The number and the size (particle size) of the hollow particles and the solid particles in a specific area or the whole area are measured to determine the average particle size (particle size) of the hollow particles and the solid particles.

In this embodiment, compared with the hollow particles, the solid particles have smaller volume, and the solid particles can fill gaps between the hollow particles, so that the compaction density of the positive electrode plate is improved, and furthermore, the energy density of the battery cell is improved.

Optionally, the difference value between the volume average particle size Dv50 of the hollow particles and the volume average particle size Dv50 of the solid particles is 3 µm to 10 µm; and/or, the difference value between the number average particle size of the hollow particles and the number average particle size of the solid particles is 3 µm to 10 µm, for example, 3 µm, 4 µm, 5 µm, 6 µm, 7 µm, 8 µm, 9 µm, 10 µm or any other numerical value in the above range. Therefore, the solid particles can better fill the gaps between the hollow particles, which facilitates further improvement of the compaction density of the positive electrode plate and the energy density of the battery cell.

Optionally, the difference value between the volume average particle size Dv50 of the hollow particles and the volume average particle size Dv50 of the solid particles is 4 µm to 8 µm; and/or, the difference value between the number average particle size of the hollow particles and the number average particle size of the solid particles is 4 µm to 8 µm. Therefore, the solid particles can better fill the gaps between the hollow particles, and reasonable matching between the hollow particles with the larger particle size and the solid particles with the smaller particle size is realized, so that the compaction density of the positive electrode plate and the energy density of the battery cell are improved.

In some embodiments, the size of the cavity of the hollow particles is 2 µm to 10 µm. For example, the size of the cavity of the hollow particles is 2 µm, 3 µm, 4 µm, 6 µm, 7 µm, 9 µm, 10 µm or any other numerical value in the above range.

The hollow particles may include particles with various shapes. For example, the hollow particles are spherical particles or ellipsoidal particles.

For spherical hollow particles, the size of the cavity of the hollow particles can be understood as the inner diameter of the hollow particles. The hollow particle is provided with a shell and a cavity provided inside the shell, the diameter of the shell is the outer diameter of the hollow particles, and the size of the cavity provided inside the shell is the inner diameter of the hollow particles.

For ellipsoidal hollow particles, the size of the cavity of the hollow particles can be understood as the average value of the maximum size and the minimum size of the cavity of the hollow particles. For example, the section of each ellipsoidal hollow particle is an ellipse, and the size of the cavity is the average value of the size of the long axis and the size of the short axis of the ellipse.

For other irregular hollow particles, the size of the cavity can be understood as the average value of the maximum size and the minimum size of the cavity.

The following takes spherical hollow particles as an example to describe the measurement of the size of the cavity of the hollow particles. The size of the cavity of the hollow particles can be measured by the following method. The hollow particles are cut by an argon ion beam polishing instrument to obtain particle sections; a plurality of images of the particle sections under the same multiple are obtained by a scanning electron microscope; and the inner diameters of the particle sections in the images are counted, the average value of the multiple inner diameters is calculated, and the average value serves as the diameter of the cavity of the hollow particles.

In a case that the size of the cavity of the hollow particles is not smaller than 2 µm, the hollow particles have the proper specific surface area, so the contact area between an electrolyte solution and the hollow particles can be increased, more lithium ions can be transmitted per unit time, and the rate performance of the battery cell can be improved; and in a case that the size of the cavity of each hollow particle is not larger than 10 µm, the hollow particles have the proper size, so the compaction density of the positive electrode plate can be improved, and furthermore, the volume energy density of the battery cell can be improved.

Optionally, the size of the cavity of the hollow particles is 4 µm to 7 µm. Therefore, both the rate performance and the volume energy density of the battery cell are taken into consideration.

In some embodiments, the volume average particle diameter Dv50 of lithium-containing phosphate is 0.3 µm to 1.5 µm, for example, 0.3 µm, 0.6 µm, 0.8 µm, 1.0 µm, 1.2 µm, 1.5 µm or any other numerical values in the above range.

In a case that the volume average particle diameter Dv50 of the lithium-containing phosphate does not exceed 1.5 µm, the lithium-containing phosphate has a proper volume, so that the compaction density of the positive electrode plate is improved, and the volume energy density of the battery cell is improved; and in a case that the volume average particle diameter of the lithium-containing phosphate is not smaller than 0.3 µm, the lithium-containing phosphate and the electrolyte solution can keep a relatively proper contact area, and thus the rate performance of the battery cell is improved.

Optionally, the volume average particle diameter Dv50 of the lithium-containing phosphate is 0.6 µm to 1.2 µm. Therefore, the rate performance and the volume energy density of the battery cell are further improved.

In some embodiments, based on the total mass of the positive electrode active material, the mass ratio of the lithium-rich manganese-based material is P, 10wt%≤P<100wt%, for example, P is 10wt%, 20wt%, 30wt%, 50wt%, 70wt%, 80wt%, 90wt%, 95wt% or any other numerical values in the above range.

The mass ratio of the lithium-rich manganese-based material is the mass ratio of the lithium-rich manganese-based material to the positive electrode active material.

Optionally, the mass ratio of the lithium-rich manganese-based material can be obtained by calculating the particle diameter and the average density of solid lithium particles and hollow particles in the lithium-rich manganese-based material and the particle diameter and the average density of the lithium-containing phosphate. Optionally, the mass ratio of the lithium-rich manganese-based material can also be obtained through other test methods, which is not limited in this embodiment of the present application.

In a case that P is not less than 10wt%, the positive electrode material contains a lithium-rich manganese-based material with a proper content, so that the energy density of the battery cell is improved; and in a case that P is less than 100wt%, the positive electrode material contains some lithium-containing phosphate, so that the cycle performance of the battery cell is improved.

Optionally, 30wt%≤P≤70wt%. Therefore, both the energy density and the cycle performance of the battery cell can be further taken into consideration.

Optionally, the positive electrode active material can also include other materials such as lithium cobalt oxide and the like, which is not limited in this embodiment of the present application.

In some embodiments, the gram volume of the lithium-rich manganese-based material is shown as Q≥153mAh/g, for example, 153 mAh/g, 158 mAh/g, 163 mAh/g or a greater value. Therefore, the energy density of the battery cell is improved.

The gram volume can refer to the ratio of the electric quantity released by the active material to the mass of the active material.

The gram volume of the lithium-rich manganese-based material can be measured by the following method. The lithium-rich manganese-based material is used as the positive electrode active material to prepare a lithium-ion battery, and then charging and discharging test is carried out on the lithium ion battery; and the ratio of the discharge capacity of the lithium ion battery to the mass of the lithium-rich manganese-based material obtained according to the charging and discharging test is the gram volume of the lithium-rich manganese-based material. The charging and discharging test method includes the following steps: discharging the lithium ion battery to 2.5 V at 1/3C in a constant-temperature environment of 25°C; standing for 5 min, charging to 4.35 V at 1/3C, and then charging to a constant voltage of less than or equal to 0.05 C at 4.35 V; and standing for 5 min, and then discharging to 2.5 V at 1/3C; and the electric quantity released in the discharging process is the discharge capacity of the lithium ion battery.

Optionally, the gram volume of the lithium-rich manganese-based material is shown as Q≥158mAh/g. Therefore, the energy density of the battery cell is further improved.

In this embodiment of the present application, different specific types of lithium-rich manganese-based materials can be selected to realize different gram capacities.

In some embodiment, a general formula of lithium-rich manganese-based material is nLi₂MnO₃ • (1-n)Li₁₊ₓ₁Niₓ₂Mnₓ₃M¹ₓ₄O₂, in which, 0.1≤n≤0.3, 0≤x1≤0.1, 0.3≤x2 < 1, 0 < x3≤0.7, and 0≤x4≤0.1, and M¹ includes one or more of Na, Mg, Al, Ca, Ba, V, Zn, Ti, Fe, Co, Cr, Nb, W, Mo, Zr, Ta, and Hf. Therefore, the lithium-rich manganese-based material can be flexibly selected according to actual conditions.

In some embodiments, the lithium-rich manganese-based material can be at least one of 0.1Li₂MnO₃ • 0.9LiNi_{0.5}Mn_{0.5}O₂, 0.2Li₂MnO₃ • 0.8LiNi_{0.5}Mn_{0.5}O₂, 0.25Li₂MnO₃ • 0.75LiNi_{0.5}Mn_{0.5}O₂, and 0.15Li₂MnO₃ • 0.85LiNi_{0.5}Mn_{0.5}O₂, 0.3Li₂MnO₃ • 0.7LiNi_{0.5}Mn_{0.5}O₂.

In some embodiments, the lithium-rich manganese-based material can be at least one of 0.2Li₂MnO₃ • 0.8LiNi_{0.5}Mn_{0.45}Mg_{0.05}O₂, 0.2Li₂MnO₃ • 0.8LiNi_{0.5}Mn_{0.45}Al_{0.05}O₂, 0.2Li₂MnO₃ • 0.8LiNi_{0.5}Mn_{0.45}V_{0.05}O₂, 0.2Li₂MnO₃ • 0.8LiNi_{0.5}Mn_{0.45}Ti_{0.05}O₂, 0.2Li₂MnO₃ • 0.8LiNi_{0.5}Mn_{0.45}C_{0.05}O₂, 0.2Li₂MnO₃ • 0.8LiNi_{0.5}Mn_{0.45}Nb_{0.05}O₂, 0.2Li₂MnO₃ • 0.8LiNi_{0.5}Mn_{0.45}W_{0.05}O₂, 0.2Li₂MnO₃ • 0.8LiNi_{0.5}Mn_{0.45}Mo_{0.05}O₂, 0.2Li₂MnO₃ • 0.8LiNi_{0.5}Mn_{0.45}Zr_{0.05}O₂, 0.2Li₂MnO₃ • 0.8LiNi_{0.5}Mn_{0.45}Ta_{0.05}O₂.

In some embodiments, M¹ is Na, and sodium ions can replace the positions of part of lithium ions.

It is to be noted that the general formula of the lithium-rich manganese-based material provided by this embodiment of the present application can be a general formula in a rational state. An ideal state can include that the added lithium-rich manganese-based material meets the general formula when the positive electrode active material is prepared. After the battery cell is prepared from the positive electrode active material, the actual content of lithium ions may be reduced compared with the general formula of the lithium-rich manganese-based material due to various conditions such as lithium ion deintercalation or lithium ion consumption. Similarly, the actual content of oxygen ions may also be reduced.

In some embodiments, the general formula of lithium-containing phosphate is Li_{1+y1}Fe_{y2}Mn_{y3}M²_{y4}PO₄, in which, 0≤y1≤0.1, 0≤y2≤1, 0≤y3≤1, 0≤y4≤0.1, and M² includes one or more of transition metal elements except Fe and Mn and non-transition metal elements. Therefore, the lithium-containing phosphate can be flexibly selected according to actual requirements.

In some embodiments, the lithium-containing phosphate can beat least one of LiFePO₄, Li_{1.1}FePO₄, LiMnPO₄, LiMn_{0.5}Fe_{0.5}PO₄, LiFe_{0.5}Mn_{0.45}Mg_{0.05}PO₄, L₁Fe_{0.5}Mn_{0.45}Al_{0.05}PO₄, LiFe_{0.5}Mn_{0.45}V_{0.05}PO₄, LiFe_{0.5}Mn_{0.45}Ti_{0.05}PO₄, LiFe_{0.5}Mn_{0.45}Co_{0.05}PO₄, LiFe_{0.5}Mn_{0.45}Nb_{0.05}PO₄, LiFe_{0.5}Mn_{0.45}W_{0.05}PO₄, LiFe_{0.5}Mn_{0.45}Mo_{0.05}PO₄, LiFe_{0.5}Mn_{0.45}Zr_{0.05}PO₄, LiFe_{0.5}Mn_{0.45}Ta_{0.05}PO₄.

Similarly, as described above, the actually measured general formula of the lithium-containing phosphate can be Li₁₊ₐFe_{1-x2-y2}Mnₓ₂M2_{y2}PO_{4+b}, a<0, b<0.

In some embodiments, the lithium-containing phosphate can be modified in a surface coating manner. For example, for LiFePO₄, the conductivity can be improved in a manner of coating the surface of the lithium-containing phosphate with carbon or a polymer. Optionally, metal cations or other cations can also be doped in the material. For example, for LiFePO₄, high-valence metal cations can be doped to improve the conductivity.

### [Positive electrode plate]

An embodiment of the present application provides a positive electrode plate, which includes the positive electrode active material in any possible embodiment.

The positive electrode plate can include a positive electrode current collector and a positive electrode material layer arranged on at least one surface of the positive electrode current collector, and the positive electrode material layer includes the positive electrode active material.

As an example, the positive electrode current collector has two opposite surfaces in the thickness direction, and the positive electrode material layer is arranged on any one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector can be formed by forming a metal material (aluminum, aluminum alloy, nickel alloy, titanium, titanium alloy, silver, silver alloy and the like) on a polymer material substrate material (such as polypropylene (PP), polyethylene glycol terephthalate (PET), polybutylene terephthalate (PBT), Polystyrene (PS), Polyethylene (PE) and the like).

In some embodiments, the compaction density of the positive electrode plate under the pressure of 400 KN is 2.7 g/cm³ to 2.9 g/cm³, optionally, the compaction density is 2.75 g/cm³ to 2.85 g/cm³. For example, the compaction density of the positive electrode plate under the pressure of 400 KN is 2.7 g/cm³, 2.75 g/cm³, 2.8 g/cm³, 2.85 g/cm³, and 2.9 g/cm³. Therefore, the energy density of the battery cell is improved.

After the positive electrode plate is subjected to cold pressing under different pressures, the compaction densities may be different. Optionally, the pressure of the positive electrode plate subjected to cold pressing does not exceed 800 KN.

In some embodiments, the positive electrode material layer includes a binder. As an example, the binder can include at least one of polyvinylidene fluoride (PVDF), Polytetrafluoroethylene (PTFE), a vinylidene fluoride-tetrafluoroethylene-propylene terpolymer, a vinylidene fluoridehexafluoropropylene-tetrafluoroethylene terpolymer, a tetrafluoroethylenehexafluoropropylene copolymer and fluorine-containing acrylate resin.

In some embodiments, the positive electrode material layer includes a conductive agent. As an example, the conductive agent can include at least one of superconducting carbon, acetylene black, carbon black, Ketjen black, carbon dots, carbon nanotubes, graphene and carbon nanofibers.

In some embodiments, the positive electrode plate can be prepared by the following steps: dispersing the components for preparing the positive electrode plate, such as the positive electrode active material, the conductive agent, the binder, an additive and any other component, in a solvent (such as N-methyl pyrrolidone) to form positive electrode slurry; and coating a positive electrode current collector with the positive electrode slurry, and performing drying, cold pressing and other processes to obtain the positive electrode plate.

### [Negative electrode plate]

A negative electrode plate generally includes a negative electrode current collector and a negative electrode material layer arranged on at least one surface of the negative electrode current collector, and the negative electrode material layer includes the negative electrode active material.

As an example, the negative electrode current collector has two opposite surfaces in the thickness direction, and the negative electrode material layer is arranged on any one or both of the two opposite surfaces of the negative electrode current collector.

In some embodiments, the negative electrode current collector can be a metal foil or a composite current collector. For example, a copper foil can be adopted as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

In some embodiments, the negative electrode active material can be a negative electrode active material which is known in the field and used for the battery. As an example, the negative electrode active material can include at least one of the following materials: artificial graphite, natural graphite, soft carbon, hard carbon, a silicon-based material, a tin-based material, lithium titanate and the like. The silicon-based material can include at least one of monatomic silicon, a silicon-oxygen compound, a silicon-carbon compound, a silicon-nitrogen compound and a silicon alloy. The tin-based material can include at least one of monatomic tin, a tin-oxygen compound and a tin alloy. The present application is not limited to these materials, and other traditional materials which can be used as the negative electrode active material of the battery can also be used. These negative electrode active materials can be used alone or in combination with more than two.

In some embodiments, the negative electrode material layer can also optionally include a binder. The binder can include at least one of Styrene Butadiene Rubber (SBR), polyacrylic acid (PAA), sodium Polyacrylate (PAAS), Polyacrylamide (PAM), polyvinyl alcohol (PVA), Sodium Alginate (SA), polymethylacrylic acid (PMAA) and carboxymethyl Chitosan (CMCS).

In some embodiments, the negative electrode material layer can also optionally include a conductive agent. The conductive agent can include at least one of superconducting carbon, acetylene black, carbon black, Ketjen black, carbon dots, carbon nanotubes, graphene and carbon fibers.

In some embodiments, the negative electrode material also optionally includes other auxiliaries, such as a thickening agent (such as sodium carboxymethylcellulose (CMC-Na)).

In some embodiments, the negative electrode plate can be prepared by the following steps: dispersing the components for preparing the negative electrode plate, such as the negative electrode active material, the conductive agent, the binder and any other component into a solvent (such as deionized water) to form negative electrode slurry; and coating the negative electrode current collector with the negative electrode slurry, and performing processes of drying, cold pressing and the other processes to obtain the negative electrode plate.

### [Electrolyte]

The electrolyte plays the role of conduct ions between the positive electrode sheet and the negative electrode sheet. There is no specific limitation on the type of electrolyte in the examples of the present application, and it can be selected according to the requirement. For example, the electrolyte can be in a liquid state, a gel state or an all-solid state.

In some embodiments, the electrolyte adopts an electrolyte solution. The electrolyte solution includes electrolyte salt and a solvent.

In some embodiments, the electrolyte salt can include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent can include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone.

In some embodiments, the electrolyte solution also optionally includes additives. For example, the additives can include a negative electrode film-forming additive and a positive electrode film-forming additive, and can also include additives that can improve certain properties of the battery, such as additives that can improve the overcharge performance of the battery, additives that can improve the high-temperature or low-temperature performance of the battery.

### [Separator]

In some embodiments, the battery cell also includes a separator. This embodiment of the present application has no special limitation on the type of the separator, and any known porous structure separator with good chemical stability and mechanical stability can be selected.

In some embodiments, the material of the separator can include at least one of glass fibers, non-woven fabric, polyethylene, polypropylene and polyvinylidene fluoride. The separator can be a spacer, and the spacer can be a single-layer film or a multi-layer composite film, which has no special limitation. When the spacer is the multi-layer composite film, the materials of each layer can be the same or different and have no special limitation.

In some embodiments, the positive electrode plate, the negative electrode plate and the spacer can be made into an electrode assembly through a winding process or a lamination process.

### [Battery cell]

An embodiment of the present application provides a battery cell, which includes the positive electrode plate in any embodiment.

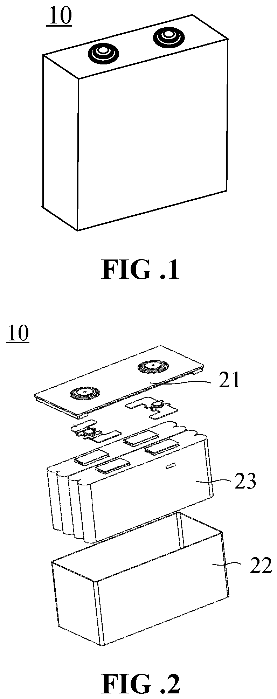

This embodiment of the present application has no special limitation on the shape of the battery cell, and the shape of the battery cell can be cylindrical, square or any other shape. For example, FIG. 1 shows the battery cell 10 with a square structure as an example.

FIG. 2 is an explosive structural schematic diagram of a battery cell according to an embodiment of the present application. In some embodiments, the battery cell can include an outer package. The outer package can be used for packaging an electrode assembly and the electrolyte. With reference to FIG. 2, the outer package can include a shell 21 and a cover plate 22. In which, the shell 21 can include a bottom plate and a side plate connected to the bottom plate, and the bottom plate and the side plate are enclosed to form an accommodating cavity. The shell 21 is provided with an opening in communication with the accommodating cavity, and the cover plate 22 can cover the opening to close the accommodating cavity. The positive electrode plate, the negative electrode plate and a spacer can form an electrode assembly 23 through a winding process or a laminating process. The electrode assembly 23 is packaged in the accommodating cavity. The electrolyte solution infiltrates in the electrode assembly 23. There can be one or more electrode assemblies 23 in the battery cell 10, and which can be selected according to specific actual requirements.

In some embodiments, the outer package of the battery cell can be a hard shell, such as a hard plastic shell, an aluminum shell, and a steel shell. The outer package of the battery cell may also be a soft bag, such as a pouch-type soft bag. The material of the soft bag can be plastic, and polypropylene, polybutylene terephthalate, polybutylene succinate and the like can be listed as plastic.

In some embodiments, the battery cell 10 can be assembled into a battery module, the number of the battery cells 10 contained in the battery module can be one or more, and the specific number can be selected according to the application and capacity of the battery module.

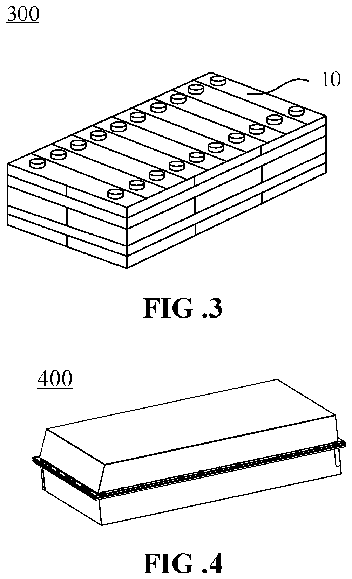

FIG. 3 is a diagram of the battery module 300 according to an embodiment of the present application. With reference to FIG. 3, in the battery module 300, a plurality of battery cells 10 can be sequentially arranged along the length direction of the battery module 300. Definitely, the battery cells 10 can also be arranged in any other manner.

In some embodiments, the battery module 300 can also be assembled into a battery, the number of the battery modules 300 contained in the battery can be one or more, and the specific number can be selected according to the application and capacity of the battery.

### [Battery]

An embodiment of the present application provides a battery, which includes the battery cell in the above embodiments.

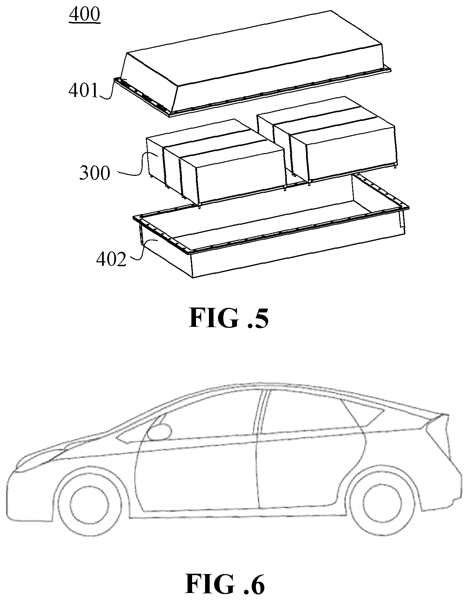

FIG. 4 is a schematic diagram of a battery according to an embodiment of the present application, and FIG. 5 is a schematic diagram of a battery according to an embodiment of the present application. As an example, with reference to FIG. 4 and FIG. 5, the battery 400 can include a battery box and a plurality of battery modules 300 arranged in the battery box. The battery box includes an upper box body 401 and a lower box body 402, and the upper box body 401 can cover the lower box body 402 and form an enclosed space for accommodating the battery modules 300. The plurality of battery modules 300 can be arranged in the battery box in any manner.

The battery cell 10 can directly form the battery 400. Or the battery cell 10 does not need to form the battery module in advance and can directly form the battery 400. The number of the battery cells included in the battery is not limited in this embodiment of the preset application.

### [Electrical apparatus]

An embodiment of the present application provides an electric device, which includes the battery in the above embodiments.

FIG. 6 is a schematic diagram of an electrical apparatus according to an embodiment of the present application. As an example, the electric device is a vehicle.

The embodiments of the present application are illustrated below. The embodiments described below are exemplary and only used to explain the present application, and are not to be construed as limiting the present application. Where specific techniques or conditions are not specified in the examples, the techniques or conditions described in the literature of the art or the product specifications are followed. If the manufacturer of the reagent or instrument is not indicated, it can be a conventional product that can be obtained through commercial purchase.

### Examples

### Example 1

In the Embodiment 1, the positive electrode active material includes a lithium-rich manganese-based material and lithium-containing phosphate. The lithium-containing phosphate is lithium iron phosphate LiFePO₄, and the lithium-rich manganese-based material is 0.2Li₂MnO₃ • 0.8LiNi_{0.5}Mn_{0.5}O₂.

The Dv50 of the lithium iron phosphate is 0.5 µm, the gram volume of the lithium-rich manganese-based material is 158 mAh/g, and based on the total mass of the positive electrode active material, the mass content of the lithium-rich manganese-based material in the positive electrode active material is 50wt%.

The mass ratio A: B of solid particles to hollow particles in the lithium-rich manganese-based material is 8:2, the Dv50 of the solid particles is 5 µm, the Dv50 of the hollow particles is 9 µm, and the size of a cavity of the hollow particles is 4 µm.

### Examples 2-4

The Examples 2-4 are different from the Example 1 in A: B.

In the Examples 2-4, the ratio of A:B is 7:3, 9:1, 5:5.

### Examples 5-8

The Examples 5-8 are different from the Example 1 in the volume average particle size Dv50 of the solid particles.

In the Examples 5-8, the volume average particle size Dv50 of the solid particles is: 2 µm, 3 µm, 6 µm, and 8 µm, respectively.

### Examples 9-12

The Examples 9-12 are different from the Example 1 in the volume average particle size Dv50 of the hollow particles.

In the Examples 9-12, the volume average particle size Dv50 of the hollow particles is: 6 µm, 7 µm, 12 µm, and 15 µm, respectively.

### Examples 13-15

The Examples 13-14 are different from the Example 1 in the size of cavity of the hollow particles.

In the Examples 13-14, the size of the cavity of the hollow particles is: 2 µm, and 7 µm, respectively.

The Example 15 is different from the Example 1 in the volume average particle size Dv50 of the hollow particles, the size of the cavity of the hollow particles, and the difference between the volume average particle size Dv50 of the hollow particles and the volume average particle size Dv50 of the solid particles.

In the Example 15, the volume average particle size Dv50 of the hollow particles is 15 µm, the size of the cavity of the hollow particles is 10 µm, and the difference between the volume average particle size Dv50 of the hollow particles and the volume average particle size Dv50 of the solid particles is 10 µm.

### Examples 16-17

The Examples 16-17 are different from the Example 1 in the gram volume of the lithium-rich manganese-based material.

In the Examples 16-17, the gram volume of the lithium-rich manganese-based material is 153 mAh/g, and 163 mAh/g, respectively.

Correspondingly, in the Examples 16-17, the lithium-rich manganese-based materials are 0.25Li₂MnO₃ • 0.75LiNi_{0.5}Mn_{0.5}O₂ and 0.15Li₂MnO₃ • 0.85LiNi_{0.5}Mn_{0.5}O₂.

### Examples 18-21

The Examples 18-21 are different from the Example 1 in the volume average particle size Dv50 of lithium iron phosphate.

In the Examples 18-21, the volume average particle size Dv50 of the lithium iron phosphate is 0.5 µm, 0.6 µm, 1.2 µm, and 1.5 µm, respectively.

### Examples 22-23

The Examples 22-23 are different from the Example 1 in the mass ratio of the lithium-rich manganese-based material to the positive electrode active material.

In the Examples 22-23, the mass ratio of the lithium-rich manganese-based material to the positive electrode active material is 30wt%, and 70wt% respectively.

### Examples 24-25

The Examples 24-25 are different from the Example 1 in the types of lithium-containing phosphate. In the Examples 24-25, the lithium-containing phosphate is LiFe_{0.5}Mn_{0.45}Mg_{0.05}PO₄, and LiMn_{0.5}Fe_{0.5}PO₄respectively.

### Contrast Example 1

The Contrast Example 1 is different from the Example 1 in that the lithium-rich manganese-based material is completely the solid particles.

### Contrast Example 2

The Contrast Example 2 is different from the Example 1 in that the lithium-rich manganese-based material is completely the hollow particles.

The positive electrode active material is used for preparing the battery cell, and the performance of the battery cell is tested. Specific parameters and test results are shown in a Table 1, and a preparation method and a test method of the battery cell are described below.

### [Preparation of battery cell]

### (1) Preparation of positive electrode plate

The positive electrode active material, the conductive agent, namely, acetylene black, and the binder, namely, polyvinylidene fluoride (PVDF) were mixed according to a mass ratio of 94:4:2, and the solvent, namely, N-methyl pyrrolidone was added, and fully stirred and mixed uniformly under a vacuum condition to obtain positive electrode slurry. Then the positive electrode slurry was uniformly coated on two surfaces of the positive electrode current collector aluminum foil without special treatment, the coating mass of the two surfaces of the positive electrode current collector aluminum foil was enabled to be the same, and then drying, cold pressing and slitting were performed to obtain the positive electrode plate.

### (2) Preparation of negative electrode plate

Artificial graphite, the conductive agent, namely, acetylene black, the binder, namely, Styrene Butadiene Rubber (SBR), and the binder, namely, sodium carboxymethylcellulose (CMC) were mixed according to a mass ratio of 95:1.5:3.1:0.4, and the solvent, namely, deionized water was added, and fully stirred and mixed uniformly to obtain negative electrode slurry. Then the negative electrode slurry was uniformly coated on two surfaces of the negative electrode current collector copper foil without special treatment, then drying and cold pressing were performed until the density reached 1.65 g/cm³, and slitting was performed to obtain the negative electrode plate.

### (3) Preparation of electrolyte solution

In an argon atmosphere glove box with a water content of less than 10 ppm, Ethylene Carbonate (EC), Polycarbonate (PC) and dimethyl carbonate (DMC) were mixed according to a mass ratio of EC: PC: DMC=3:3:3, and then LiPF₆ was added, and stirred uniformly to obtain the electrolyte solution. The concentration of LiPF₆ in the electrolyte solution was 1 mol/L.

### (4) Assembling of battery cell

The positive electrode plate, a Polyethylene (PE) spacer and the negative electrode plate were stacked in sequence, the spacer was located between the positive electrode plate and the negative electrode plate and can space the positive electrode plate from the negative electrode plate; then the stacked components were wound to obtain the electrode assembly; the electrode assembly was arranged in a battery shell, and the electrolyte solution was injected after drying; and processes of formation, standing and the like were performed to obtain the lithium ion battery cell.

### [Performance test of battery cell]

### (1) Rate performance test

At a temperature of 25°C, the lithium ion battery cell was charged to 4.35 V at the constant current of 0.1C multiplying power, then charged to 0.05 C at the constant voltage, stood for 5 min, and then discharged to 2.5 V at the constant current of 0.1C multiplying power, and the discharge capacity at the moment was recorded as 0.1C discharge capacity; the lithium ion battery cell was stood for 30 min, then charged to 4.35 V at the constant current of 0.1C multiplying power, then charged to 0.05 C at the constant voltage, stood for 5 min, and then discharged to 2.5 V at the constant current of 2C multiplying power, and the discharge capacity at the moment was recorded as 2C discharge capacity. The multiplying power performance R of the battery=2C discharge capacity/0.1C discharge capacity x 100%.

### (2) Volume energy density test

At the temperature of 25°C, the lithium ion battery cell was charged to 4.35V at the constant current of 0.33 C, then charged to the current smaller than 0.05 C at the constant voltage of 4.35 V, and then discharged to 2.5 V at the constant current of 0.33 C, thus obtaining the discharge energy E; and the size of the battery was measured by a vernier caliper, and the volume V was calculated.

The volume energy density was shown as K=E/V.

As an example, the type of the battery cell in this embodiment of the present application is 406080, the thickness T of the battery is about 4 mm, which changes along with the compaction density of the positive electrode plate, the actual measurement thickness is taken as the criterion. The width of the battery cell is shown as W=60mm, and the height is shown as H=80 mm. Therefore, the volume energy density was calculated.

### (3) Compactness density measurement

After the positive electrode plate was subjected to cold pressing (the cold pressing pressure was 400 KN), the thickness T of the electrode plate was measured, and the compaction density ρ ₚᵣₑₛₛᵤᵣₑ was calculated according to the thickness T of the positive electrode plate and the surface density m. The calculation formula is as follows: ρ ₚᵣₑₛₛᵤᵣₑ = m/(T-T _{foil}). In which, m is the surface density g/cm² of the electrode plate, and T _{foil} is the thickness cm of the positive electrode current collector.

In the Table 1, the volume average particle size Dv50 of the solid particles is represented by D1, the volume average particle size Dv50 of hollow particles is represented by D2, the difference value between the volume average particle size Dv50 of the hollow particles and the volume average particle size Dv50 of the solid particles is represented by D3, the size of cavity of the hollow particles is represented by D4, the volume average particle size Dv50 of lithium iron phosphate is represented by D5, the mass ratio of the lithium-rich manganese-based material to the positive electrode active material is represented by P, the gram volume of the lithium-rich manganese-based material is represented by Q, the compaction density of the positive electrode plate is represented by ρ ₚᵣₑₛₛᵤᵣₑ, the energy density of the battery cell is represented by K, and the rate performance of the battery cell is represented by R.

**Table 1 Specific parameters and test result of examples and contrast examples**

| No. | A:B | D1/ µm | D2/ µm | D3/ µm | D4/ µm | Q/ mAh/g | D5/ µm | P/ wt% | ρ_{pressure/} g/cm³ | K/ Wh/L | R/ % |
|---|---|---|---|---|---|---|---|---|---|---|---|
| Contrast Example 1 | | 5 | | | | 158 | 0.9 | 50 | 2.65 | 655 | 85 |
| Contrast Example 2 | | | 15 | | 4 | 158 | 0.9 | 50 | 2.60 | 645 | 87 |
| Example 1 | 8:2 | 5 | 9 | 4 | 4 | 158 | 0.9 | 50 | 2.85 | 707 | 95 |
| Example 2 | 7:3 | 5 | 9 | 4 | 4 | 158 | 0.9 | 50 | 2.80 | 694 | 95 |
| Example 3 | 9:1 | 5 | 9 | 4 | 4 | 158 | 0.9 | 50 | 2.75 | 682 | 92 |
| Example 4 | 1:1 | 5 | 9 | 4 | 4 | 158 | 0.9 | 50 | 2.70 | 670 | 95 |
| Example 5 | 8:2 | 2 | 9 | 7 | 4 | 158 | 0.9 | 50 | 2.75 | 682 | 95 |
| Example 6 | 8:2 | 3 | 9 | 6 | 4 | 158 | 0.9 | 50 | 2.76 | 685 | 94 |
| Example 7 | 8:2 | 6 | 9 | 3 | 4 | 158 | 0.9 | 50 | 2.80 | 694 | 93 |
| Example 8 | 8:2 | 8 | 9 | 1 | 4 | 158 | 0.9 | 50 | 2.80 | 694 | 92 |
| Example 9 | 8:2 | 5 | 6 | 0 | 4 | 158 | 0.9 | 50 | 2.70 | 670 | 93 |
| Example 10 | 8:2 | 5 | 7 | 2 | 4 | 158 | 0.9 | 50 | 2.80 | 694 | 94 |
| Example 11 | 8:2 | 5 | 12 | 7 | 4 | 158 | 0.9 | 50 | 2.80 | 694 | 89 |
| Example 12 | 8:2 | 5 | 15 | 10 | 4 | 158 | 0.9 | 50 | 2.75 | 682 | 87 |
| Example 13 | 8:2 | 5 | 9 | 4 | 2 | 158 | 0.9 | 50 | 2.85 | 707 | 91 |
| Example 14 | 8:2 | 5 | 9 | 4 | 7 | 158 | 0.9 | 50 | 2.70 | 670 | 95 |
| Example 15 | 8:2 | 5 | 15 | 10 | 10 | 158 | 0.9 | 50 | 2.70 | 670 | 89 |
| Example 16 | 8:2 | 5 | 9 | 4 | 4 | 153 | 0.9 | 50 | 2.85 | 695 | 92 |
| Example 17 | 8:2 | 5 | 9 | 4 | 4 | 163 | 0.9 | 50 | 2.85 | 719 | 95 |
| Example 18 | 8:2 | 5 | 9 | 4 | 4 | 158 | 0.5 | 50 | 2.85 | 707 | 95 |
| Example 19 | 8:2 | 5 | 9 | 4 | 4 | 158 | 0.6 | 50 | 2.85 | 707 | 94 |
| Example 20 | 8:2 | 5 | 9 | 4 | 4 | 158 | 1.2 | 50 | 2.85 | 707 | 93 |
| Example 21 | 8:2 | 5 | 9 | 4 | 4 | 158 | 1.5 | 50 | 2.85 | 707 | 93 |
| Example 22 | 8:2 | 5 | 9 | 4 | 4 | 158 | 0.9 | 30 | 2.70 | 670 | 95 |
| Example 23 | 8:2 | 5 | 9 | 4 | 4 | 158 | 0.9 | 70 | 2.85 | 726 | 92 |
| Example 24 | 8:2 | 5 | 9 | 4 | 4 | 158 | 0.9 | 50 | 2.75 | 684 | 94 |
| Example 25 | 8:2 | 5 | 9 | 4 | 4 | 158 | 0.9 | 50 | 2.70 | 672 | 93 |

In combination with the Example 1 and the Contrast Example 1, the solid particles and the hollow particles are arranged in the lithium-rich manganese-based material, so that the rate performance of the battery cell is improved; in combination with the Example 1 and the Contrast Example 2, the solid particles and the hollow particles are arranged in the lithium-rich manganese-based material, so that the volume energy density of the battery cell is improved. Therefore, by the technical solution of this embodiment of the present application, both the volume energy density and the rate performance of the battery cell can be taken into consideration.

In combination with the Examples 2-4, the mass ratio of the solid particles to the hollow particles is reasonably set, so that both the rate performance and the energy density of the battery cell are taken into consideration. In combination with the Examples 5-8, 9-12, 13-15 and 18-21, the particle size of the hollow particles, the particle size of the solid particles and the particle size of lithium-containing phosphate are reasonably set, so that both the rate performance and the energy density of the battery cell are taken into consideration. In combination with the Examples 16-17, a proper lithium-rich manganese-based material is selected, so that the energy density of the battery cell is improved In combination with the Examples 22-23, the mass ratio of the lithium-rich manganese-based material to the positive electrode active material is reasonably set, so that the rate performance and the energy density of the battery cell are taken into consideration. In combination with the Examples 24-25, various different materials can be selected as the lithium-containing phosphate.

It is be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A positive electrode active material, comprising a lithium-rich manganese-based material and a lithium-containing phosphate, wherein the lithium-rich manganese-based material comprises solid particles and hollow particles, the hollow particle comprising a shell and a cavity provided inside the shell.

2. The positive electrode active material according to claim 1, wherein in the lithium-rich manganese-based material, the ratio of the mass A of the solid particles to the mass B of the hollow particles is: 1:1≤A:B≤9:1; optionally, 7:3≤A:B≤8:2;
and/or,
in the lithium-rich manganese-based material, the ratio of the number E of the solid particles to the number F of the hollow particles is: 70:30≤E:F≤96:4; optionally, 85:15≤E:F≤90:10.

3. The positive electrode active material according to claim 1 or 2, wherein the volume average particle size Dv50 of the solid particles is 2 µm to 8 µm; optionally, 3 µm to 6 µm.

4. The positive electrode active material according to any one of claims 1 to 3, wherein the volume average particle size Dv50 of the hollow particles is 5 µm to 15 µm; optionally, 7 µm to 12 µm.

5. The positive electrode active material according to any one of claims 1 to 4, wherein the volume average particle size Dv50 of the hollow particles is larger than the volume average particle size Dv50 of the solid particles; optionally, the difference value between the volume average particle size Dv50 of the hollow particles and the volume average particle size Dv50 of the solid particles is 3 µm to 10 µm; further optionally, the difference value is 4 µm to 8 µm;
and/or,
the number average particle size of the hollow particles is larger than that of the solid particles; optionally, the difference value between the number average particle size of the hollow particles and the number average particle size of the solid particles is 3 µm to 10 µm; and further optionally, the difference value is 4 µm to 8 µm.

6. The positive electrode active material according to any one of claims 1 to 5, wherein the size of the cavity of the hollow particles is 2 µm to 10 µm; optionally, 4 µm to 7 µm.

7. The positive electrode active material according to any one of claims 1 to 6, wherein the volume average particle size Dv50 of the lithium-containing phosphate is 0.3 µm to 1.5 µm; optionally, 0.6 µm to 1.2 µm.

8. The positive electrode active material according to any one of claims 1 to 7, wherein based on the total mass of the positive electrode active material, the mass ratio of the lithium-rich manganese-based material is P, 10wt%≤P<100wt%; optionally, 30wt%≤P≤70wt%.

9. The positive electrode active material according to any one of claims 1 to 8, wherein the gram volume of the lithium-rich manganese-based material is shown as Q≥153mAh/g; optionally, Q≥158mAh/g.

10. The positive electrode active material according to any one of claims 1 to 9, wherein a general formula of the lithium-rich manganese-based material is nLi₂MnO₃ • (1-n)Li₁₊ₓ₁Niₓ₂Mnₓ₃M¹ₓ₄O₂, in which, 0.1≤n≤0.3, 0≤x1≤0.1, 0.3≤x2<1, 0<x3≤0.7, and 0≤x4≤0.1, and M¹ comprises one or more of Na, Mg, Al, Ca, Ba, V, Zn, Ti, Fe, Co, Cr, Nb, W, Mo, Zr, Ta, and Hf.

11. The positive electrode active material according to any one of claims 1 to 10, wherein a general formula of the lithium-containing phosphate is Li_{1+y1}Fe_{y2}Mn_{y3}M²_{y4}PO₄, in which, 0≤y1≤0.1, 0≤y2≤1, 0≤y3≤1, and 0≤y4≤0.1, and M² comprises one or more of transition metal elements except Fe and Mn and non-transition metal elements.

12. A positive electrode plate, comprising the positive electrode active material according to any one of claims 1 to 11.

13. The positive electrode plate according to claim 12, wherein the compaction density of the positive electrode plate is 2.70 g/cm³ to 2.90 g/cm³, optionally, 2.75 g/cm³ to 2.85 g/cm³.

14. A battery cell, comprising the positive electrode plate according to claim 12 to 13.

15. A battery, comprising the battery cell according to claim 14.

16. An electrical apparatus, comprising the battery according to claim 15.
